# FASCICULE DE BREVET EUROPEEN

(11) **EP 0 561 661 B1**
(45) Date de publication et mention de la délivrance du brevet: **22.05.1996**
(21) Numéro de dépôt: 93400515.8
(22) Date de dépôt: 01.03.1993
(51) Int. Cl.: B60P 1/16

(54) **Mécanisme de basculement d'une benne articulée sur le châssis d'un véhicule**
Kippvorrichtung für einen Behälter, der drehbar auf einem Fahrzeugrahmen montiert ist
Tipping mechanism of a articulated dumper and vehicle frame

(30) Priorité: 17.03.1992 FR 9203168
(43) Date de publication de la demande: 22.09.1993
(73) Titulaire: MARREL, F-42160 Andrézieux-Bouthéon (FR)
(72) Inventeur: Heritier, Albert, F-42340 Veauche (FR); Grail, Joseph, F-42100 Saint Etienne (FR)
(74) Mandataire: Rinuy, Santarelli

(56) Documents cités:
- FR-A- 2 087 538
- FR-A- 2 448 453
- FR-A- 2 645 088
- US-A- 5 074 622

## Description

L'invention a trait à un mécanisme de basculement d'une benne articulée sur le châssis d'un véhicule.

On connaît déjà un tel mécanisme, appelé compas, qui comporte deux bras ayant à peu près la même longueur, un premier bras articulé à une première extrémité sur le châssis, un deuxième bras articulé à une première extrémité sur une deuxième extrémité du premier bras et articulé à une deuxième extrémité sur la benne, et un vérin de basculement articulé à une première extrémité sur le premier bras et à une deuxième extrémité sur le deuxième bras, ce mécanisme admettant une position abaissée où la tige du vérin de basculement est rentrée avec les premier et deuxième bras disposés à peu près horizontalement l'un au dessus de l'autre, tandis que la benne est en position de transport, et une position déployée où la tige du vérin de basculement est sortie avec les premier et deuxième bras relevés et la benne en position de bennage, la benne passant de la position de transport à la position de bennage en basculant autour d'une articulation sur le châssis (voir par exemple FR-A-2 087 538 ou FR-A-2 448 453).

En vue de diminuer la distance entre le châssis du véhicule et la benne, afin de limiter la hauteur maximale du véhicule et d'en augmenter la stabilité par abaissement du centre de gravité, on cherche à diminuer autant que possible la hauteur de ce mécanisme.

Pour y parvenir tout en gardant un vérin de basculement relativement long pour limiter le nombre d'éléments télescopiques dont il doit être pourvu, on a déjà proposé de disposer le vérin en oblique, c'est-à-dire avec un point d'articulation sur chacun des premier et deuxième bras plus près de la première extrémité que de la deuxième. Cependant, plus on incline le vérin ( plus on rapproche ses points d'articulation des deuxièmes extrémités des bras), plus on diminue en position abaissée du mécanisme son bras de levier vis à vis du point d'articulation entre les deux bras, et plus l'effort qu'il doit exercer en début de manoeuvre est important, de sorte qu'il faut un vérin à très grande section et/ou une très forte pression en début de mouvement, ce qui augmente considérablement le prix de revient du mécanisme.

L'invention vise à fournir un mécanisme de basculement du même type avec un meilleur prix de revient.

Elle propose à cet effet un mécanisme de basculement d'une benne articulée sur le châssis d'un véhicule, comportant un premier bras articulé à une première extrémité sur le châssis, un deuxième bras articulé à une première extrémité sur une deuxième extrémité du premier bras et articulé à une deuxième extrémité sur la benne, et un vérin de basculement articulé à une première extrémité sur le premier bras et à une deuxième extrémité sur le deuxième bras, le mécanisme admettant une position abaissée où la tige du vérin de basculement est rentrée avec les premier et deuxième bras disposés à peu près horizontalement l'un au dessus de l'autre tandis que la benne est en position de transport, et une position déployée où la tige du vérin de basculement est sortie avec les premier et deuxième bras relevés et la benne en position de bennage, la benne passant de la position de transport à la position de bennage en basculant autour d'une articulation sur le châssis ; caractérisé en ce qu'il comporte en outre au moins un vérin décolleur adapté à avoir sa tige rentrée dans ladite position abaissée et à la sortir pour agir en commun avec le vérin de basculement depuis ladite position abaissée jusqu'à une position décollée où sa tige est sortie, le vérin décolleur n'agissant pas entre les positions décollée et déployée du mécanisme.

En agissant ainsi au moment où l'effort demandé au vérin de basculement serait maximum, le vérin de décollement permet de garder un dimensionnement raisonnable au vérin de basculement, même s'il est particulièrement en oblique. On réalise donc en évitant le surdimensionnement du vérin de basculement, une économie qui justifie largement le coût du vérin de décollement.

A cet égard, on notera que le coût du vérin de décollement est limité puisqu'il n'agit qu'entre les positions abaissée et décollée, tandis que sa course est très réduite puisque sa tige est sortie dans la position décollée.

Selon des caractéristiques préférées du mécanisme selon l'invention, le vérin décolleur est disposé transversalement auxdits premier et deuxième bras dans ladite position abaissée, à proximité de la première extrémité du premier bras et de la deuxième extrémité du deuxième bras.

En étant ainsi disposé, le vérin décolleur travaille dans les meilleures conditions, puisqu'il dispose d'un bras de levier maximal vis à vis de l'articulation entre les deux bras, de sorte que la force qu'il doit exercer est relativement modérée, ce qui limite son prix de revient.

Selon d'autres caractéristiques préférées, le vérin décolleur est alimenté en parallèle au vérin de basculement.

Le vérin décolleur est ainsi commandé sans qu'aucun dispositif particulier ne soit nécessaire : au début du mouvement, le fluide hydraulique se répartit entre les vérins de basculement et décolleur pour faire sortir leurs tiges ensemble, et lorsque la tige du vérin décolleur ne peut plus sortir, l'ensemble du fluide se dirige vers le vérin de basculement.

Selon d'autres caractéristiques préférées, le vérin décolleur est fixé sur l'un des premier et deuxième bras, et prend appui sur l'autre bras, entre les positions abaissée et décollée.

En prévoyant ainsi que le vérin décolleur coopère directement avec les bras du compas, au lieu par exemple d'être situé entre le châssis du véhicule et la benne, on rassemble tous les éléments du mécanisme dans un seul ensemble, ce qui facilite le montage du mécanisme de basculement sur le véhicule.

De préférence, le vérin décolleur est fixé par son corps sur le premier bras et prend appui par sa tige sur le deuxième bras.

En effet, en fixant le corps du vérin décolleur sur le bras le plus proche du châssis du véhicule on facilite l'alimentation de ce vérin.

De façon préférée, le vérin décolleur est fixé de manière semi-rigide sur l'un des bras, l'autre bras étant muni d'un profil de réception à section en U, à l'intérieur duquel prend appui le vérin décolleur entre les positions abaissée et décollée.

La fixation semi-rigide permet que le vérin pivote légèrement par rapport au bras sur lequel il est fixé entre les positions abaissée et décollée afin qu'il suive l'ouverture du compas, tout en permettant au vérin de rester dans une position déterminée par rapport au bras sur lequel il est fixé lorsqu'il perd contact avec l'autre bras, de sorte qu'à la fin du mouvement d'abaissement du mécanisme le vérin décolleur va se remettre en appui sur le profil de réception de l'autre bras.

La fixation semi-rigide se fait par exemple au moyen d'une articulation coopérant avec des moyens élastiques tendant à ramener l'articulation à une position centrale, ou au moyen d'un silentbloc (marque déposée).

L'exposé de l'invention sera maintenant poursuivi par la description d'un exemple de réalisation, donnée ci-après à titre illustratif et non limitatif en référence aux dessins annexés. Sur ceux-ci :
- la figure 1 est une vue de côté en élévation montrant un véhicule équipé d'une benne articulée sur son châssis et d'un mécanisme de basculement conforme à l'invention, la configuration illustrée en trait plein étant la configuration de transport du véhicule tandis que la configuration dessinée en trait mixte est une configuration de bennage à laquelle on parvient à partir de la position de transport en faisant basculer la benne vers l'arrière ;
- la figure 2 est une vue en élévation prise depuis l'arrière du véhicule, les configurations dessinées en trait plein et en trait mixte étant respectivement la configuration de transport et une configuration de bennage à laquelle on parvient à partir de la position de transport en faisant basculer latéralement la benne du côté droit du véhicule ;
- la figure 3 est une vue de côté du mécanisme de basculement conforme à l'invention, dans une position abaissée correspondant à la position de transport de la benne ;

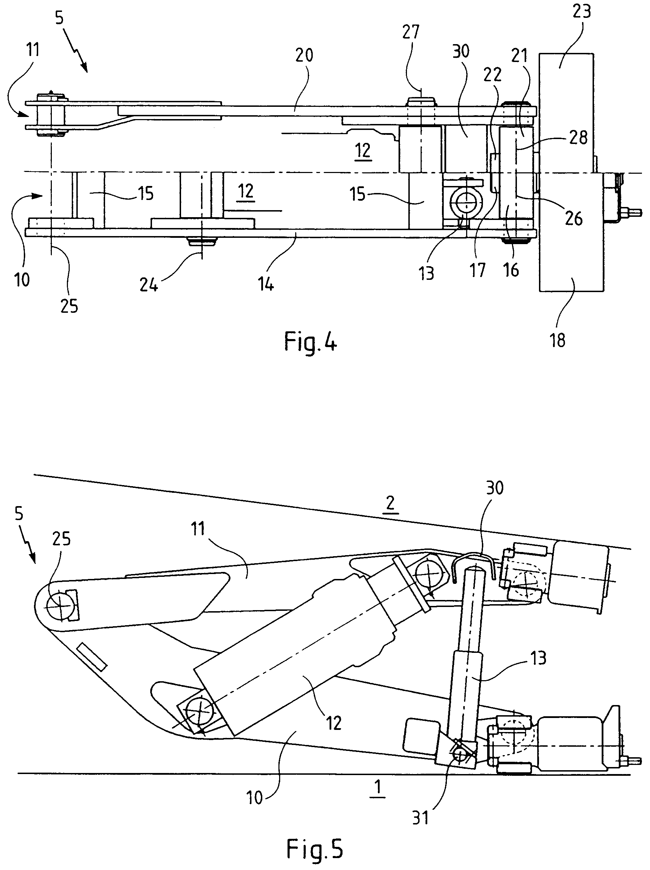

- la figure 4 est une vue de dessus de ce mécanisme dans cette position ; la demi-vue supérieure montrant le bras supérieur du mécanisme et la demi-vue inférieure le bras inférieur ;
- les figures 5 et 6 sont des vues similaires à la figure 3, prises respectivement juste après la position décollée alors que le mécanisme fonctionne pour lever la benne, et dans la position déployée au maximum du mécanisme de basculement où la benne est donc en position de bennage maximum ; et
- la figure 7 est une vue prise depuis l'arrière du véhicule, montrant les balanciers du mécanisme de basculement en trait fort dans la position abaissée, et le balancier supérieur en trait mixte dans une position déployée où la benne a été basculée latéralement sur le côté droit du véhicule.

Le véhicule montré partiellement sur les dessins comporte un châssis 1 à l'arrière duquel est articulée une benne 2, ce châssis et cette benne comportant deux cadres en regard, respectivement 3 et 4, qui portent les moyens d'articulation de la benne par rapport au châssis et qui logent en leur centre un mécanisme 5 de basculement de la benne.

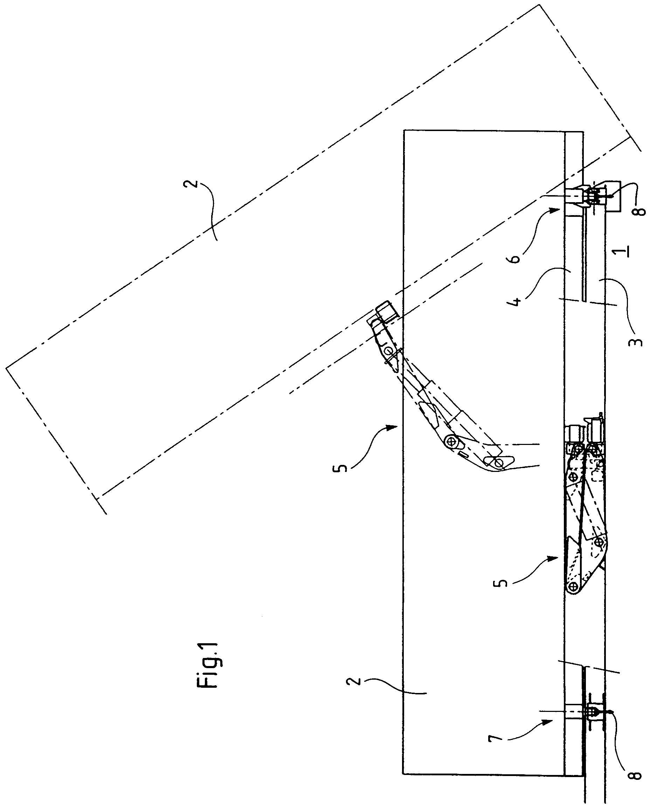

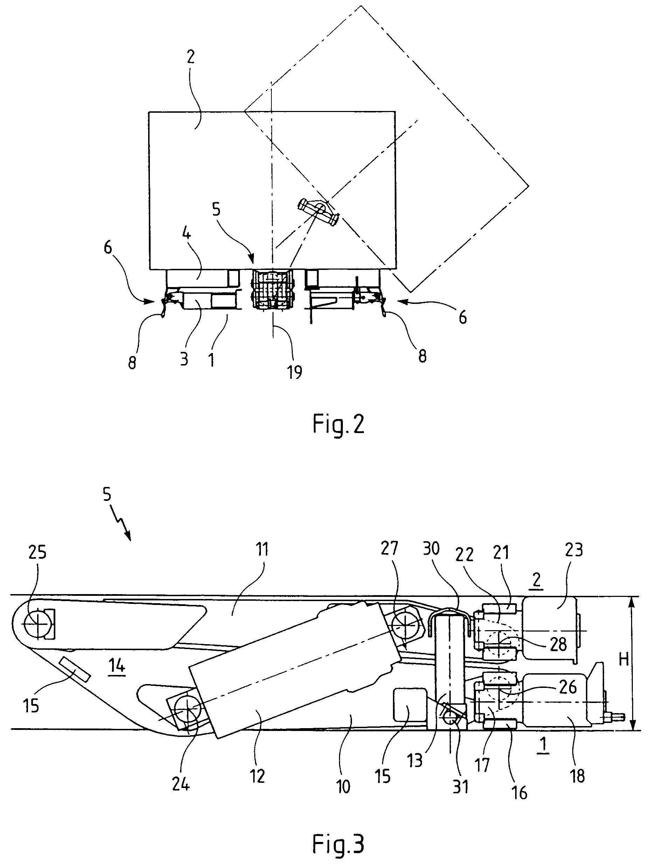

Les moyens d'articulation de la benne 2 sur le châssis 1 comportent de façon bien connue : à l'arrière, de chaque côté, des dispositifs 6 qui permettent le pivotement soit autour d'un axe transversal arrière pour permettre à la benne 2 de basculer en arrière comme montré sur la figure 1, soit le pivotement autour d'un axe longitudinal droit pour permettre à la benne de basculer sur le côté droit comme montré sur la figure 2, soit autour d'un axe longitudinal gauche pour pivoter du côté gauche ; et à l'avant, de chaque côté, un dispositif 7 pour permettre les basculements latéraux, chaque dispositif 6 ou 7 étant muni d'un levier de commande 8 qu'on met dans la position appropriée pour que le mécanisme de basculement 5, lorsqu'il se déploie, fasse basculer la benne 2 autour de l'un des axes transversal ou longitudinaux précités.

Le mécanisme de basculement 5 comporte deux bras longitudinaux 10 et 11 ayant à peu près la même longueur, articulés entre eux à leur extrémité avant, tandis que leur extrémité arrière est respectivement articulée sur le châssis 1 et sur la benne 2, un vérin de basculement 12 étant articulé à l'extrémité de son corps sur le bras 10 et à l'extrémité de sa tige sur le bras 11, un vérin décolleur 13 étant disposé transversalement par rapport aux bras 10 et 11 (dans la position abaissée montrée sur la figure 3), à proximité des extrémités arrière de ces bras.

Le bras 10 est formé par deux plaques parallèles 14 reliées par des entretoises 15. Il est articulé sur le châssis 1 par l'intermédiaire d'un balancier 16 à chaque extrémité duquel il coopère par un pivot, le balancier coopérant lui-même en son centre avec un pivot 17 de la traverse 18 du cadre 3, le pivot 17 étant disposé de sorte que le balancier 16 soit articulé autour d'un axe contenu dans le plan de symétrie longitudinal 19 du véhicule (figure 2).

Le bras 11 est également formé par deux plaques 20, et articulé sur la benne par l'intermédiaire d'un balancier 21 à chaque extrémité duquel il coopère par un pivot, le balancier coopérant lui-même en son centre avec un pivot 22 d'une traverse 23 du cadre 4, le pivot 22 étant disposé de sorte que le balancier 21 pivote autour d'un axe contenu dans le plan 19.

Le vérin 12 est disposé entre les plaques 14 et 20, avec son axe d'articulation 24 par rapport au bras 10 beaucoup plus proche de l'axe d'articulation 25 entre les bras 10 et 11 que de l'axe d'articulation 26 entre le bras 10 et le châssis 1 ; et avec son axe d'articulation 27 par rapport au bras 11 beaucoup plus proche de l'axe d'articulation 28 de ce bras par rapport à la benne 2 que de l'axe d'articulation 25. Le vérin 12 est ainsi disposé particulièrement en oblique, il est pratiquement à plat dans la position abaissée montrée sur les figures 1 et 3. Cette disposition du vérin 12 permet d'avoir une hauteur H entre le châssis 1 et la benne 2 qui est particulièrement réduite, mais en contrepartie le bras de levier du vérin 12 vis à vis de l'axe d'articulation 25 est très réduit.

Dans l'exemple illustré, il y a deux vérins décolleurs 13, disposés côte à côte entre les plaques 14 et 20. Chaque vérin 13 est fixé par son corps sur le bras 10 tandis que sa tige prend appui sur le bras 11 qui comporte à cet effet un profil de réception 30 à section en U, disposé transversalement avec son ouverture en regard du bras 10, la tige de chaque vérin 13 prenant ainsi appui à l'intérieur du profil 30. Chaque vérin 13 est fixé de manière semi-rigide sur le bras 10, grâce à un pivot transversal 31 et à des moyens élastiques (non représentés) qui tendent à ramener le vérin 13 dans la position représentée lorsqu'il a tourné par rapport au pivot 31.

Chacun des vérins 12 et 13 a sa chambre à grande section reliée à la sortie d'un distributeur simple effet relié en outre à une pompe et à un réservoir. En position centrale du distributeur, son orifice de sortie est isolé de la pompe et du réservoir ; dans une position dite de levage de la benne l'orifice de sortie du distributeur est connecté à la pompe ; et dans une position dite de descente de la benne, l'orifice de sortie du distributeur est connecté au réservoir par l'intermédiaire d'un système de limitation de débit.

Dans la position abaissée du mécanisme 5 montré sur la figure 3, la tige de chacun des vérins 12 et 13 est rentrée avec les bras 10 et 11 disposés à peu près horizontalement l'un au dessus de l'autre tandis que la benne 2 est en position de transport.

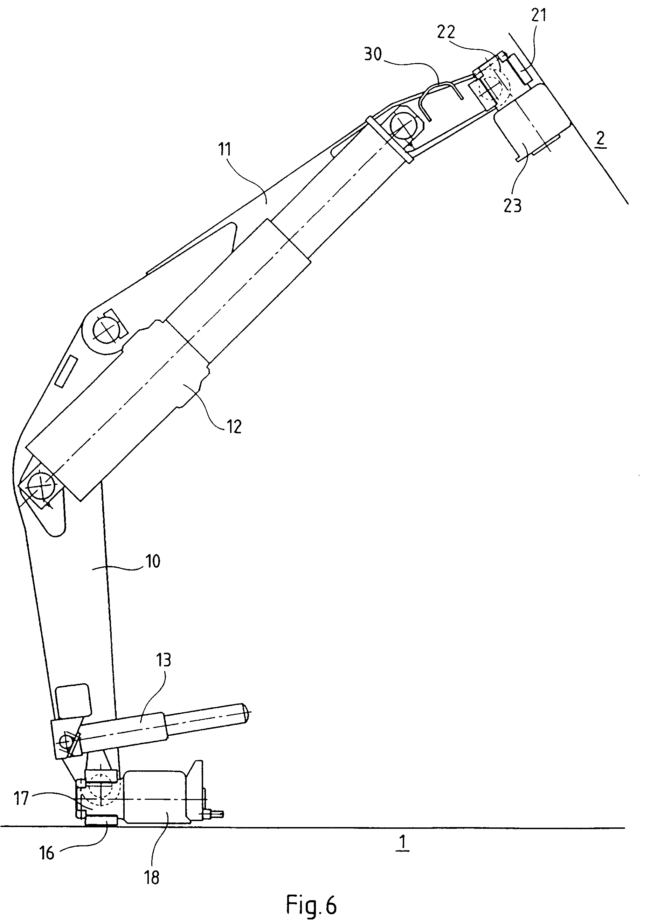

Si l'on amène alors le distributeur dans la position de levage, les chambres à grande section des vérins 12 et 13 sont mises sous pression, et ils agissent en commun pour écarter les bras 11 et 12 jusqu'à une position décollée où la tige du vérin 13 est entièrement sortie, les bras 10 et 11 continuant alors à s'écarter sous le seul effet de l'allongement du vérin 12, comme montré sur la figure 5, le basculement de la benne se poursuivant au maximum jusqu'à la position déployée montrée sur la figure 6, où la tige du vérin 12 est entièrement sortie et la benne en position de bennage maximum.

On notera que les vérins 13 sont positionnés pour travailler dans les meilleures conditions, puisque leur bras de levier vis-à-vis de l'articulation 25 est maximisé. La forme en U du profilé 30 permet d'éviter qu'ils ne basculent complètement autour du pivot 31 pendant qu'ils travaillent, ce pivot permettant aux vérins 13 de s'incliner pour suivre le bras 11.

On observera que chaque vérin 13, lorsqu'il ne coopère pas avec le profilé 30, garde son positionnement par rapport au bras 10, grâce à la fixation semi-rigide de son corps sur le bras 10. On observera également que la tige du vérin 12 est en deux éléments télescopiques.

Pour faire redescendre la benne, on place le distributeur sur la position descente, la benne descend alors sous l'effet de son poids, avec cependant une vitesse régulée puisqu'on limite le débit avec lequel l'huile provenant de la chambre à grande section du vérin 12 rejoint le réservoir. En fin de descente, le profil 30 vient coiffer la tige des vérins 13 puis porte sur celle-ci et la fait rentrer jusqu'à ce que le mécanisme 5 soit à nouveau en position abaissée.

La position déployée extrême montrée sur la figure 6 est atteinte lorsqu'on fait basculer la benne autour de l'axe longitudinal arrière après avoir déverrouillé les dispositifs 7. Les balanciers 16 et 21 n'ont pas tourné par rapport aux pivots 17 et 22.

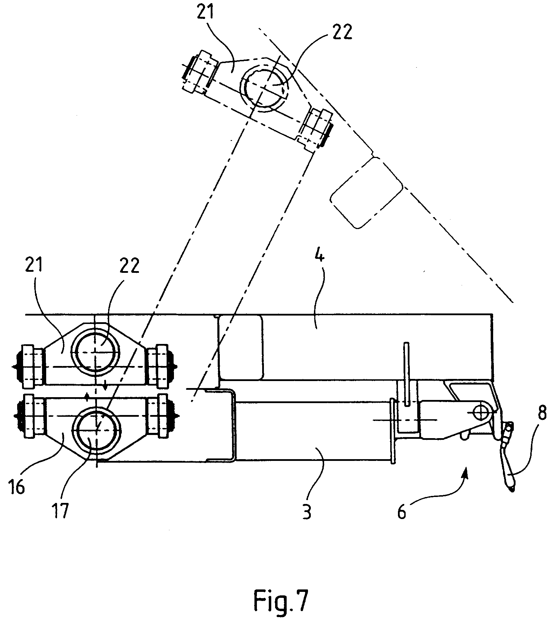

En revanche, si l'on a déverrouillé les dispositifs 6 et 7 situés sur le côté gauche du véhicule, la benne va pivoter autour de l'axe longitudinal droit lorsque le mécanisme 5 va se déployer, les balanciers 16 et 21 tournant alors par rapport aux pivots 17 et 22. Le fonctionnement est similaire, mais comme la benne atteint en bennage latéral l'angle approprié bien avant que les bras 10 et 11 soient écartés au maximum (voir figures 6 et 7), un capteur de déplacement est prévu pour couper l'alimentation du vérin 12 lorsque l'angle maximum est atteint.

Dans une variante simplifiée du mécanisme 5, les bras 10 et 11 sont articulés directement sur le châssis 1 et sur la benne 2, au lieu de l'être par l'intermédiaire des balanciers 16 et 21, dans le cas où la benne doit être basculée uniquement en arrière.

Dans une autre variante, le corps des vérins 13 est fixé au bras 10 par l'intermédiaire de silentbloc (marque déposée), au lieu du pivot 31 et des moyens élastiques précités.

Compte tenu de l'espace disponible, dans l'exemple illustré, il est avantageux d'avoir disposé deux vérins 13 côte à côte, le nombre de vérins de décollement étant choisi en fonction des circonstances : il peut y en avoir un seul ou davantage que deux.

## Revendications

1. Mécanisme de basculement d'une benne (2) articulée sur le châssis (1) d'un véhicule, comportant un premier bras (10) articulé à une première extrémité sur le châssis (1), un deuxième bras (11) articulé à une première extrémité sur une deuxième extrémité du premier bras (10) et articulé à une deuxième extrémité sur la benne (2), et un vérin de basculement (12) articulé à une première extrémité sur le premier bras (10) et à une deuxième extrémité sur le deuxième bras (11), le mécanisme admettant une position abaissée où la tige du vérin de basculement (12) est rentrée avec les premier et deuxième bras (10, 11) disposés à peu près horizontalement l'un au dessus de l'autre tandis que la benne (2) est en position de transport, et une position déployée où la tige du vérin de basculement (12) est sortie avec les premier et deuxième bras (10, 11) relevés et la benne en position de bennage, la benne (2) passant de la position de transport à la position de bennage en basculant autour d'une articulation sur le châssis (1) ; caractérisé en ce qu'il comporte en outre au moins un vérin décolleur (13) adapté à avoir sa tige rentrée dans ladite position abaissée et à la sortir pour agir en commun avec le vérin de basculement (12) depuis ladite position abaissée jusqu'à une position décollée où sa tige est sortie, le vérin décolleur (13) n'agissant pas entre les positions décollée et déployée du mécanisme.

2. Mécanisme selon la revendication 1, caractérisé en ce que le vérin décolleur (13) est disposé transversalement auxdits premier et deuxième bras (10, 11) dans ladite position abaissée, à proximité de la première extrémité du premier bras (10) et de la deuxième extrémité du deuxième bras (11).

3. Mécanisme selon l'une quelconque des revendications 1 ou 2, caractérisé en ce que le vérin décolleur (13) est alimenté en parallèle au vérin de basculement (12).

4. Mécanisme selon la revendication 3 caractérisé en ce que lesdits vérin de basculement et décolleur (12, 13) sont des vérins simple effet alimentés du côté grande section, leurs tiges rentrant sous l'effet du poids de la benne (2).

5. Mécanisme selon l'une quelconque des revendications 1 à 4, caractérisé en ce que le vérin décolleur (13) est fixé sur l'un des premier et deuxième bras (10, 11), et prend appui sur l'autre bras, entre les positions abaissée et décollée.

6. Mécanisme selon la revendication 5, caractérisé en ce que le vérin décolleur (13) est fixé par son corps sur le premier bras (10) et prend appui par sa tige sur le deuxième bras (11).

7. Mécanisme selon l'une quelconque des revendications 5 ou 6, caractérisé en ce que le vérin décolleur (13) est fixé de manière semi-rigide sur l'un des bras (10), l'autre bras (11) étant muni d'un profil de réception (30) à section en U, à l'intérieur duquel prend appui le vérin décolleur entre les positions abaissée et décollée.

8. Mécanisme selon la revendication 7, caractérisé en ce que le vérin décolleur est fixé sur ledit bras (10) au moyen d'une articulation coopérant avec des moyens élastiques tendant à ramener l'articulation à une position centrale.

9. Mécanisme selon la revendication 7, caractérisé en ce que le vérin décolleur est fixé sur ledit bras (10) au moyen d'un silentbloc.

10. Mécanisme selon l'une quelconque des revendications 1 à 9, caractérisé en ce que lesdits premier et deuxième bras (10, 11) sont articulés respectivement sur le châssis (1) et sur la benne (2) par l'intermédiaire d'un balancier (16, 21).

## Claims

1. A mechanism for tipping a skip (2) articulated on the chassis (1) of a vehicle, comprising a first arm (10) articulated at a first end on the chassis (1), a second arm (11) articulated at a first end on a second end of the first arm (10) and articulated at a second end on the skip (2) and a tipping jack (12) articulated at a first end on the first arm (10) and at a second end on the second arm (11), the mechanism permitting a lowered position in which the shaft of the tipping jack (12) is retracted, with the first and second arms (10, 11) disposed almost horizontally one above the other whilst the skip (2) is in the transportation position, and an unfolded position in which the shaft of the tipping jack (12) is pushed out, with the first and second arms (10, 11) raised and the skip in the tipping position, the skip (2) passing from the transportation position to the tipping position by pivoting around an articulation on the chassis (1), characterized in that it also comprises at least one initial deployment jack (13) adapted to have its shaft retracted in the said lowered position and to push it out to act in common with the tipping jack (12) from the said lowered position to an initial deployment position in which its shaft is pushed out, the initial separation jack (13) not acting between the initial deployment position and the unfolded position of the mechanism.

2. A mechanism according to claim 1, characterized in that the initial deployment jack (13) is disposed transversely to the said first and second arms (10, 11) in the said lowered position, near the first end of the said first arm (10) and the second end of the second arm (11).

3. A mechanism according to either one of claims 1 or 2, characterized in that the initial deployment jack (13) is fed in parallel with the tipping jack (12).

4. A mechanism according to claim 3, characterized in that the said tipping and initial deployment jacks (12, 13) are single action jacks supplied at their large cross-section end, their shafts being retracted as a result of the weight of the skip (2).

5. A mechanism according to any one of claims 1 to 4, characterized in that the initial deployment jack (13) is fixed on one of the first or second arms (10, 11) and bears on the other arm between the lowered and initial deployment positions.

6. A mechanism according to claim 5, characterized in that the initial deployment jack (13) is fixed by its body on the first arm (10) and its shaft bears on the second arm (11).

7. A mechanism according to either one of claims 5 or 6, characterized in that the initial deployment jack (13) is fixed in a semi-rigid manner on the one arm (10), the other arm (11) being provided with a reception profile element (30), having a U-shaped cross-section, inside which the initial separation jack bears between the lowered and initial deployment positions.

8. A mechanism according to claim 7, characterized in that the initial deployment jack is fixed on the said arm (10) by means of an articulation cooperating with resilient means tending to return the articulation to a central position.

9. A mechanism according to claim 7, characterized in that the initial separation jack is fixed on the said arm (10) by means of a silentbloc.

10. A mechanism according to any one of claims 1 to 9, characterized in that the said first and second arms (10, 11) are articulated respectively on the chassis (1) and on the skip (2) through the intermediary of a rocker arm (16, 21).

## Patentansprüche

1. Kippvorrichtung für einen Behälter (2), der schwenkbar auf einem Fahrzeugrahmen (1) gelagert ist, mit einem ersten Arm (10), der mit einem ersten Ende am Rahmen (1) angelenkt ist, einem zweiten Arm (11), der mit einem ersten Ende am zweiten Ende des ersten Arms (10) und mit einem zweiten Ende am Behälter (2) angelenkt ist, und einem Kippzylinder (12), der mit einem ersten Ende am ersten Arm (10) und mit einem zweiten Ende am zweiten Arm (11) angelenkt ist, wobei in einer abgesenkten Stellung der Vorrichtung die Kolbenstange des Kippzylinders (12) eingezogen ist und der erste und zweite Arm (10, 11) etwa horizontal übereinander liegen, während der Behälter (2) die Transportstellung einnimmt, und in einer ausgeschwenkten Stellung die Kolbenstange des Kippzylinders (12) ausgefahren ist, der erste und zweite Arm (10, 11) angehoben sind und der Behälter (2) eine Kippstellung einnimmt, und wobei der Behälter (2) während des Übergangs von der Transportstellung in die Kippstellung um ein Gelenk an dem Rahmen (1) schwenkbar ist, **dadurch gekennzeichnet**, daß sie weiterhin wenigstens einen Abhebezylinder (13) aufweist, der so ausgebildet und angeordnet ist, daß seine Kolbenstange in der abgesenkten Stellung eingezogen ist und, ausgehend von dieser abgesenkten Stellung, ausfährt, um gemeinsam mit dem Kippzylinder (12) zu wirken, bis eine abgehobene Stellung erreicht ist, in der seine Kolbenstange ausgefahren ist, und der zwischen der abgehobenen Stellung und der ausgeschwenkten Stellung der Vorrichtung unwirksam ist.

2. Vorrichtung nach Anspruch 1, **dadurch gekennzeichnet**, daß der Abhebezylinder (13) in der abgesenkten Stellung quer zum ersten und zweiten Arm (10, 11), und zwar nahe dem ersten Ende des ersten Arms (10) und dem zweiten Ende des zweiten Arms (11), angeordnet ist.

3. Vorrichtung nach einem der Ansprüche 1 oder 2, **dadurch gekennzeichnet**, daß der Abhebezylinder (13) parallel zum Kippzylinder (12) mit Druck beaufschlagbar ist.

4. Vorrichtung nach Anspruch 3, **dadurch gekennzeichnet**, daß die Kipp- und Abhebezylinder (12, 13) einfach wirkende, auf der Seite des großen Querschnitts mit Druck beaufschlagbare Zylinder sind, deren Kolbenstangen unter der Wirkung des Gewichts des Behälters (2) zurückstellbar sind.

5. Vorrichtung nach einem der Ansprüche 1 bis 4, **dadurch gekennzeichnet**, daß der Abhebezylinder (13) am ersten oder zweiten Arm (10, 11) befestigt ist und sich zwischen der abgesenkten Stellung und der abgehobenen Stellung am jeweils anderen Arm abstützt.

6. Vorrichtung nach Anspruch 5, **dadurch gekennzeichnet**, daß der Abhebezylinder (13) mit seinem Zylinderkörper am ersten Arm (10) befestigt ist und sich über seine Kolbenstange am zweiten Arm (11) abstützt.

7. Vorrichtung nach einem der Ansprüche 5 oder 6, **dadurch gekennzeichnet**, daß der Abhebezylinder (13) in einer halb-starren Weise an einem der Arme (10) befestigt ist, während der andere Arm (11) mit einem im Querschnitt U-förmigen Aufnahmeprofil (30) versehen ist, in dessen Innerem sich der Abhebezylinder zwischen der abgesenkten Stellung und der abgehobenen Stellung abstützt.

8. Vorrichtung nach Anspruch 7, **dadurch gekennzeichnet**, daß der Abhebezylinder an dem Arm (10) mittels eines Gelenks befestigt ist, das mit elastischen Mitteln zusammenwirkt, welche das Bestreben haben, die Gelenkteile in eine mittlere Stellung zurückzuführen.

9. Vorrichtung nach Anspruch 7, **dadurch gekennzeichnet**, daß der Abhebezylinder mittels eines Lagerelements vom Typ Silentbloc an dem Arm (10) befestigt ist.

10. Vorrichtung nach einem der Ansprüche 1 bis 9, **dadurch gekennzeichnet**, daß der erste und zweite Arm (10, 11) jeweils mittels eines Pendellagers(16, 21) schwenkbar am Rahmen (1) und am Behälter (2) gelagert sind.
